# EUROPÄISCHE PATENTSCHRIFT

(11) **EP 2 173 595 B1**
(45) Veröffentlichungstag und Bekanntmachung des Hinweises auf die Patenterteilung: **31.08.2011**
(21) Anmeldenummer: 08785925.2
(22) Anmeldetag: 04.07.2008
(51) Int. Cl.: B60W 30/18, F16H 61/21

(54) **VERFAHREN ZUR STEUERUNG EINES AUTOMATISIERTEN STUFENSCHALTGETRIEBES**
METHOD FOR CONTROLLING AN AUTOMATED STEP-BY-STEP VARIABLE-SPEED TRANSMISSION
PROCÉDÉ DE COMMANDE D'UNE BOÎTE DE VITESSES AUTOMATISÉE À RAPPORTS DÉMULTIPLIÉS

(30) Priorität: 02.08.2007 DE 102007036337
(43) Veröffentlichungstag der Anmeldung: 14.04.2010
(73) Patentinhaber: ZF Friedrichshafen AG, 88038 Friedrichshafen (DE)
(72) Erfinder: PETZOLD, Rainer, 88045 Friedrichshafen (DE)
(86) Internationale Anmeldenummer: PCT/EP2008/058677
(87) Internationale Veröffentlichungsnummer: WO 2009/015992

(56) Entgegenhaltungen:
- EP-A- 0 992 386
- WO-A-03/002368
- WO-A-2005/084995
- DE-A1- 19 733 465
- DE-A1- 19 942 715

## Beschreibung

Die Erfindung betrifft ein Verfahren zur Steuerung eines automatisierten Stufenschaltgetriebes, das innerhalb eines Antriebsstrangs eines Kraftfahrzeugs eingangsseitig über mindestens eine steuerbare Reibungskupplung oder einen hydrodynamischen Drehmomentwandler mit einem als Verbrennungsmotor ausgebildeten Antriebsmotor und ausgangsseitig über einen Achsantrieb mit antreibbaren Rädern einer Antriebsachse in Verbindung steht, wobei bei Fahrzeugstillstand, laufendem Antriebsmotor und geöffnetem Antriebsstrang ein Anrollen des Kraftfahrzeugs mit einer Schaltung des Stufenschaltgetriebes verhindert oder zumindest begrenzt wird.

Unter einem automatisierten Stufenschaltgetriebe der vorbezeichneten Art wird ein automatisiertes Schaltgetriebe, ein automatisiertes Doppelkupplungsgetriebe oder ein Planeten-Automatgetriebe verstanden. Unter dem Begriff automatisiertes Stufenschaltgetriebe soll auch ein Automatgetriebe fallen, dessen Übersetzungsverhältnis an sich stufenlos veränderbar ist, bei dem aber ein Umschaltgetriebe eine Drehrichtungsumkehr der Getriebeabtriebswelle ermöglicht und bei dem mittels einer geeigneten Ansteuerung von Übersetzungsänderungsmitteln auch ein Schalten zwischen programmtechnisch fest vorgegebenen Übersetzungsstufen möglich ist.

Ein in Vorgelegebauweise ausgeführtes automatisiertes Schaltgetriebe steht üblicherweise mit seiner Eingangswelle über eine einzige steuerbare, also automatisiert ein- und ausrückbare Reibungskupplung, wie beispielsweise einer passiv schließbaren Ein- oder Mehrscheiben-Trockenkupplung oder einer aktiv schließbaren Lamellenkupplung, mit dem Antriebsmotor in Verbindung, wobei die Reibungskupplung sowohl die Funktion eines Anfahrelementes als auch die einer Schaltkupplung erfüllt. Bei einem aus zwei Teilgetrieben mit jeweils einer Eingangswelle bestehenden automatisierten Doppelkupplungsgetriebe sind beide Eingangswellen über jeweils eine steuerbare Reibungskupplung mit dem Antriebsmotor verbindbar. Dagegen steht ein Planeten-Automatgetriebe üblicherweise mit seiner Eingangswelle über einen ein Anfahrelement bildenden hydrodynamischen Drehmomentwandler mit dem Antriebsmotor in Verbindung. Möglich sind jedoch auch andere Kombinationen von Stufenschaltgetrieben und Anfahrelementen, beispielsweise ein Kombination eines automatisierten Schaltgetriebes mit einem diesem vorgeschalteten hydrodynamischen Drehmomentwandler oder eine Kombination eines Planeten-Automatgetriebes mit einer diesem vorgeschalteten Reibungskupplung.

Bei einem Kraftfahrzeug, dessen Antriebsstrang eine derartige Kombination aus einem Stufenschaltgetriebe und einem Anfahrelement umfasst, besteht bei laufendem Antriebsmotor und geöffnetem Antriebsstrang, also bei in seiner Neutral-Stellung befindlichem Stufenschaltgetriebe und/oder geöffnetem Anfahrelement, allgemein die Gefahr, dass das Kraftfahrzeug von dem Fahrer ungewollt entsprechend einem eingelegten Gang oder entsprechend einer vorliegenden Fahrbahnneigung anrollt, was zu gefährlichen Situationen sowohl für die Fahrzeuginsassen wie auch für andere Verkehrsteilnehmer führen kann.

So ist es z.B. möglich, dass ein Kraftfahrzeug, das mit einem automatisierten Stufenschaltgetriebe und einer passiv schließbaren Reibungskupplung ausgerüstet ist, bei laufendem Antriebsmotor, geöffneter Reibungskupplung und eingelegtem Gang beim Auftreten eines Defektes an der Kupplungssteuerung aufgrund des störungsbedingten Schließens der Reibungskupplung selbsttätig anfährt. Um dies zu vermeiden, ist z.B. in der DE 199 26 697 A1 eine Vorrichtung und ein Verfahren vorgeschlagen worden, nach denen bei stehendem Kraftfahrzeug, laufendem Antriebsmotor, geöffneter Reibungskupplung und eingelegtem Gang das Stufenschaltgetriebe in seine Neutral-Stellung geschaltet, d.h. der eingelegte Gang ausgelegt wird, wenn ein sich über einen vorbestimmten Zeitraum erstreckender, nicht fahrbereiter Zustand des Kraftfahrzeugs erkannt wird.

In einem ähnlichen Verfahren nach der DE 102 58 834 A1 ist bei prinzipiell gleich aufgebautem Antriebsstrang vorgesehen, dass bei stehendem Kraftfahrzeug, laufendem Antriebsmotor, geöffneter Reibungskupplung und eingelegtem Gang das Stufenschaltgetriebe in Neutral geschaltet wird, wenn ein sich über einen vorbestimmten Zeitraum erstreckender geöffneter Zustand einer Fahrzeugtür erkannt wird. Hierdurch kann jeweils ein ungewolltes Anfahren des Kraftfahrzeugs aufgrund einer Störung in der Kupplungssteuerung oder aufgrund einer versehentlichen Betätigung eines Fahrbedienungselementes, insbesondere des Fahrpedals, wodurch ein Schließen der Reibungskupplung bewirkt wird, vermieden werden.

Ein ungewolltes Anrollen des Kraftfahrzeugs aufgrund einer vorliegenden Fahrbahnsteigung bzw. Fahrbahngefälles kann hierdurch jedoch nicht verhindert werden. Bei geöffnetem Antriebsstrang ist daher zur sicheren Festlegung des Kraftfahrzeugs das Einlegen bzw. das ausreichende Anziehen einer Feststellbremse durch den Fahrer erforderlich. Ist die Feststellbremse jedoch nicht eingelegt oder nicht ausreichend angezogen, z.B. weil der Fahrer die vorliegende Fahrbahnsteigung unterschätzt hat und daher das Einlegen oder ausreichend feste Anziehen der Feststellbremse unterlassen hat, oder weil der Fahrer oder ein anderer Fahrzeuginsasse die Feststellbremse versehentlich gelöst hat, kann das Kraftfahrzeug unkontrolliert bergab anrollen. Wenn sich der Fahrer in dieser Situation an dem Fahrerplatz befindet und das Anrollen bemerkt, so kann er das unkontrollierte Anrollen zwar durch die Betätigung der Betriebsbremse oder durch das Einlegen eines Gangs über die Betätigung eines Schaltbedienungselementes und gegebenenfalls durch die Betätigung des Fahrpedals verhindern. Dies erfordert jedoch die Anwesenheit des Fahrers an dem Fahrerplatz und eine hohe Reaktionsfähigkeit des Fahrers, was nicht immer sichergestellt ist.

Vor diesem Hintergrund liegt der Erfindung die Aufgabe zugrunde, ein Verfahren zur Steuerung eines automatisierten Stufenschaltgetriebes der eingangs genannten Art anzugeben, mit dem zur Erhöhung der Verkehrssicherheit ein unkontrolliertes Anrollen des Kraftfahrzeugs unter den vorbeschriebenen Bedingungen auf einfache Weise, insbesondere ohne einen zusätzlichen apparativen Aufwand, verhindert oder zumindest begrenzt werden kann.

Die Lösung dieser Aufgabe besteht im Fall eines eingangsseitig über mindestens eine steuerbare Reibungskupplung mit dem Antriebsmotor in Verbindung stehenden Stufenschaltgetriebes in Verbindung mit den Merkmalen des Oberbegriffs des Anspruchs 1 darin, dass bei in seiner Neutral-Stellung geschaltetem Stufenschaltgetriebe eine Sicherheitsfunktion aktiviert wird, in der eine Betätigung eines Schaltbedienungselementes, des Fahrpedals und des Bremspedals sowie die aktuelle Rollgeschwindigkeit sensorisch erfasst werden, und in der bei nicht betätigten Fahrbedienungselementen (Schaltbedienungselement, Fahrpedal, Bremspedal) bei Überschreiten einer vorab festgelegten Grenzgeschwindigkeit die Reibungskupplung bedarfsweise geöffnet, ein Anfahrgang eingelegt und die Reibungskupplung geschlossen wird.

Im Fall eines eingangsseitig über einen hydrodynamischen Drehmomentwandler mit dem Antriebsmotor in Verbindung stehenden Stufenschaltgetriebes besteht die Lösung der Aufgabe in Verbindung mit den Merkmalen des Oberbegriffs des Anspruchs 2 darin, dass bei in seiner Neutral-Stellung geschaltetem Stufenschaltgetriebe eine Sicherheitsfunktion aktiviert wird, in der eine Betätigung eines Schaltbedienungselementes, des Fahrpedals und des Bremspedals sowie die aktuelle Rollgeschwindigkeit sensorisch erfasst werden, und in der bei nicht betätigten Fahrbedienungselementen (Schaltbedienungselement, Fahrpedal, Bremspedal) bei Überschreiten einer vorab festgelegten Grenzgeschwindigkeit ein Anfahrgang eingelegt wird.

Vorteilhafte und zweckmäßige Ausgestaltungen sowie Weiterbildungen des erfindungsgemäßen Verfahrens sind Gegenstand der Unteransprüche, wobei die Rückbezüge aufgrund der beiden hinsichtlich der Bauart des Anfahrelementes unterschiedlichen Hauptansprüche zu beachten sind.

Die Erfindung geht demnach aus von einem Kraftfahrzeug mit einem automatisierten Stufenschaltgetriebe, das innerhalb eines Antriebsstrangs eines Kraftfahrzeugs eingangsseitig über mindestens eine steuerbare Reibungskupplung oder einen hydrodynamischen Drehmomentwandler mit einem als Verbrennungsmotor ausgebildeten Antriebsmotor und ausgangsseitig über einen Achsantrieb mit antreibbaren Rädern einer Antriebsachse in Verbindung steht. Erfindungsgemäß wird bei Fahrzeugstillstand, laufendem Antriebsmotor, und den mindestens durch das in seine Neutral-Stellung geschaltete Stufenschaltgetriebe geöffneten Antriebsstrang ein Anrollen des Kraftfahrzeugs durch das bedarfsweise Öffnen des Anfahrelementes, das Einlegen eines Anfahrgangs und das bedarfsweise Schließen des Anfahrelementes automatisch, d.h. ohne eine Aktivität des Fahrers, verhindert oder zumindest begrenzt, wodurch eine deutliche Erhöhung der Verkehrssicherheit des Kraftfahrzeugs erreicht ist. Dabei entfällt das Öffnen des Anfahrelementes, wenn dieses als aktiv schließbare Reibungskupplung, wie z.B. als Lamellenkupplung, oder als hydrodynamischer Drehmomentwandler ausgebildet ist. Das Schließen des Anfahrelementes entfällt dagegen nur dann, wenn das Anfahrelement als hydrodynamischer Drehmomentwandler ausgebildet ist.

Durch das Einlegen des Anfahrgangs und das bedarfsweise Schließen des Anfahrelementes wird der Antriebsstrang geschlossen und somit durch die Bremswirkung des in seiner Neutral-Stellung befindlichen Antriebsmotors ein unkontrolliertes Anrollen des Kraftfahrzeugs verhindert. Das erfindungsgemäße Verfahren kann in moderne, ohnehin mit der entsprechenden Sensorik versehene Kraftfahrzeuge auf einfache Weise und ohne einen zusätzlichen apparativen Aufwand implementiert werden. So sind neben Sensoren zur Erfassung einer Betätigung eines Schaltbedienungselementes, wie eines Fahrschalters oder eines Wählhebels, des Fahrpedals und des Bremspedals für die Durchführung des Verfahrens nur in modernen Kraftfahrzeugen ohnehin vorhandene Raddrehzahlsensoren oder ein Drehzahlsensor an der Ausgangswelle des Stufenschaltgetriebes für die Erfassung der aktuellen Rollgeschwindigkeit erforderlich.

Als einzulegender Anfahrgang kann unabhängig von der Anrollrichtung ein zur Grenzgeschwindigkeit passender Anfahrgang für Vorwärtsfahrt eingelegt werden. Ist das Kraftfahrzeug vorwärts angerollt, so gerät der Antriebsmotor durch das Einlegen des Vorwärtsgangs in den Schubbetrieb, d.h. das Anrollen des Kraftfahrzeugs wird durch das Schleppmoment des Antriebsmotors abgebremst. Ob das Kraftfahrzeug danach verzögert wird oder weiter beschleunigt, hängt von der Relation des Schleppmomentes zu der Hangabtriebskraft ab. Wenn das Kraftfahrzeug dagegen rückwärts angerollt ist, kann das Leerlaufmoment des Antriebsmotors bei hinreichend kleiner Hangabtriebskraft eine Rollrichtungsumkehr des Kraftfahrzeugs bewirken. Eine höhere Hangabtriebskraft kann dagegen, sofern dies nicht durch geeignete Maßnahmen verhindert wird, zum Abwürgen des Antriebsmotors führen, wodurch das Kraftfahrzeug dann durch den stehenden Antriebsmotor an einem weiteren Wegrollen gehindert wird.

Alternativ dazu ist es jedoch auch möglich, dass zusätzlich die aktuelle Anrollrichtung sensorisch erfasst wird, und dass ein in Richtung der Anrollrichtung wirksamer und zur Grenzgeschwindigkeit passender Anfahrgang eingelegt wird. In diesem Fall wird zum einen ein belastungstechnisch allgemein ungünstiges Abwürgen des Antriebsmotors vermieden und ein bedarfsweises Anfahren in die Anrollrichtung erleichtert, das z.B. durch eine entsprechende Betätigung eines Fahrschalters bzw. eines Wählhebels und/oder des Fahrpedals von dem Fahrer ausgelöst werden kann.

Wenn das Anfahrelement als Reibungskupplung ausgebildet ist, wird zweckmäßig bei einer auf das Schließen des Antriebsstrangs nachfolgenden Verzögerung des Kraftfahrzeugs, also bei einer Abnahme der Rollgeschwindigkeit, die Reibungskupplung bevorzugt mit Unterschreitung einer vorab festgelegten Mindestgeschwindigkeit oder einer vorab festgelegten Mindestdrehzahl des Antriebsmotors wieder geöffnet. Hierdurch wird ein Abwürgen des Antriebsmotors vermieden, so dass die Betriebsbereitschaft des Antriebsmotors und der von diesem abhängigen und zum Teil sicherheitsrelevanten Zusatzfunktionen erhalten bleibt. Wenn der Fahrer nicht rechtzeitig eingreift, kann sich das Anrollen und Abbremsen durch Einlegen des Anfahrgangs mehrfach wiederholen, so dass sich eine Art Sägezahnprofil der Anrollgeschwindigkeit ergibt, welches die Aufmerksamkeit eines bisher nicht aktiven Fahrzeuginsassen erregt und diesen schließlich zum Eingreifen veranlasst.

Im geöffneten Zustand der Reibungskupplung kann der Anfahrgang zumindest vorübergehend eingelegt bleiben. Nach dem Öffnen der Reibungskupplung ist es zur Herstellung einer funktional offenen Betriebsbereitschaft des Antriebsstrangs und speziell bei einer passiv schließbaren Reibungskupplung zur Vermeidung eines störungsbedingten Anrollens jedoch vorteilhaft, wenn der Anfahrgang spätestens mit Erreichen des Fahrzeugstillstands ausgelegt wird.

Wenn das Anfahrelement dagegen als hydrodynamischer Drehmomentwandler ausgebildet ist, wird zweckmäßig bei einer auf das Schließen des Antriebsstrangs nachfolgenden Verzögerung des Kraftfahrzeugs mit Unterschreitung der vorab festgelegten Mindestgeschwindigkeit oder der vorab festgelegten Mindestdrehzahl des Antriebsmotors nur der eingelegte Anfahrgang ausgelegt.

Bei einer auf das Schließen des Antriebsstrangs nachfolgenden Beschleunigung des Kraftfahrzeugs, also bei einer weiteren Zunahme der Rollgeschwindigkeit, kann zur Vermeidung eines Überdrehens des Antriebsmotors bei Erreichen oder Überschreiten einer vorab festgelegten Maximalgeschwindigkeit oder einer vorab festgelegten Maximaldrehzahl des Antriebsmotors um einen Gang hochgeschaltet werden. Hierdurch wird dann zwar die an den Rädern der Antriebsachse wirksame Bremskraft des Antriebsmotors reduziert, jedoch eine Beschädigung oder Zerstörung des Antriebsmotors vermieden.

Es versteht sich in Kenntnis der Erfindung von selbst, dass der Hochschaltvorgang entsprechend der Bauart des Stufenschaltgetriebes und der Bauart des Anfahrelementes durchgeführt wird, d.h. dass bei einem automatisierten Schaltgetriebe die Reibungskupplung vor dem Gangwechsel geöffnet und nach dem Gangwechsel geschlossen wird, und dass bei einem automatisierten Doppelkupplungsgetriebe zunächst der höhere Gang in dem anderen Teilgetriebe eingelegt wird, dann zeitlich überschnitten die Reibungskupplung des dem eingelegten Anfahrgang zugeordneten Teilgetriebes geöffnet und die Reibungskupplung des dem höheren Gang zugeordneten Teilgetriebes geschlossen wird, und abschließend der Anfahrgang ausgelegt wird.

Zur Vermeidung einer Hochschaltung kann bei einer auf das Schließen des Antriebsstrangs nachfolgenden weiteren Beschleunigung des Kraftfahrzeugs jedoch auch vorgesehen sein, dass bei Erreichen oder Überschreiten einer vorab festgelegten Maximalgeschwindigkeit oder einer vorab festgelegten Maximaldrehzahl des Antriebsmotors eine automatische Betätigung einer Fahrzeugbremse, wie der Betriebsbremse oder der Feststellbremse, erfolgt. Für eine automatische Betätigung der Fahrzeugbremse sind allerdings zusätzliche Fremdkraftmittel, wie eine Bremsdruckpumpe, ein Bremsdrucksteuerungsventil oder ein Bremsstellmotor, erforderlich.

Das Bremsmoment der Fahrzeugbremse kann derart geregelt werden, dass die Rollgeschwindigkeit des Kraftfahrzeugs konstant gehalten wird, oder dass die Rollgeschwindigkeit des Kraftfahrzeugs bis zum Erreichen des Fahrzeugstillstands abnimmt.

Wird während der aktivierten Sicherheitsfunktion mindestens ein Fahrbedienungselement, wie ein Wählhebel, ein Fahrschalter, das Fahrpedal oder das Bremspedal, betätigt, so wird die Sicherheitsfunktion beendet und in den normalen Anfahr- oder Fahrmodus gewechselt.

Bei einer Ausbildung des Anfahrelementes als Reibungskupplung kann zusätzlich vorgesehen sein, dass vor der Beendigung der Sicherheitsfunktion zumindest bei einer Betätigung eines Schaltbedienungselementes und/oder des Bremspedals die Reibungskupplung geöffnet wird. Da die Betätigung eines Schaltelementes, wie eines Fahrschalters oder eines Wählhebels und des Bremspedals einen nachfolgend innerhalb des Anfahr- oder Fahrmodus ablaufenden Gangwechsel erwarten lässt, kann dieser durch dass frühe Öffnen der Reibungskupplung beschleunigt ablaufen. Dagegen ist bei einer Betätigung des Fahrpedals grundsätzlich eine nachfolgende Weiterfahrt in dem eingelegten Gang möglich, so dass die Reibungskupplung in diesem Fall zweckmäßig zunächst geschlossen bleibt.

Zur Verdeutlichung der Erfindung ist der Beschreibung eine Zeichnung beigefügt. In diesen zeigt
- Fig. 1: einen in drei Teile aufgeteilten Ablaufplan einer bevorzugten Variante des erfindungsgemäßen Verfahrens für einen Antriebsstrang mit ei- nem automatisierten Schaltgetriebe und einem als Reibungskupplung ausgebildeten Anfahrelement, und
- Fig. 2: einen in drei Teile aufgeteilten Ablaufplan einer bevorzugten Variante des erfindungsgemäßen Verfahrens für einen Antriebsstrang mit ei- nem Planeten-Automatge-triebe und einem als hydrodynamischen Drehmomentwandler ausgebildeten Anfahrelement.

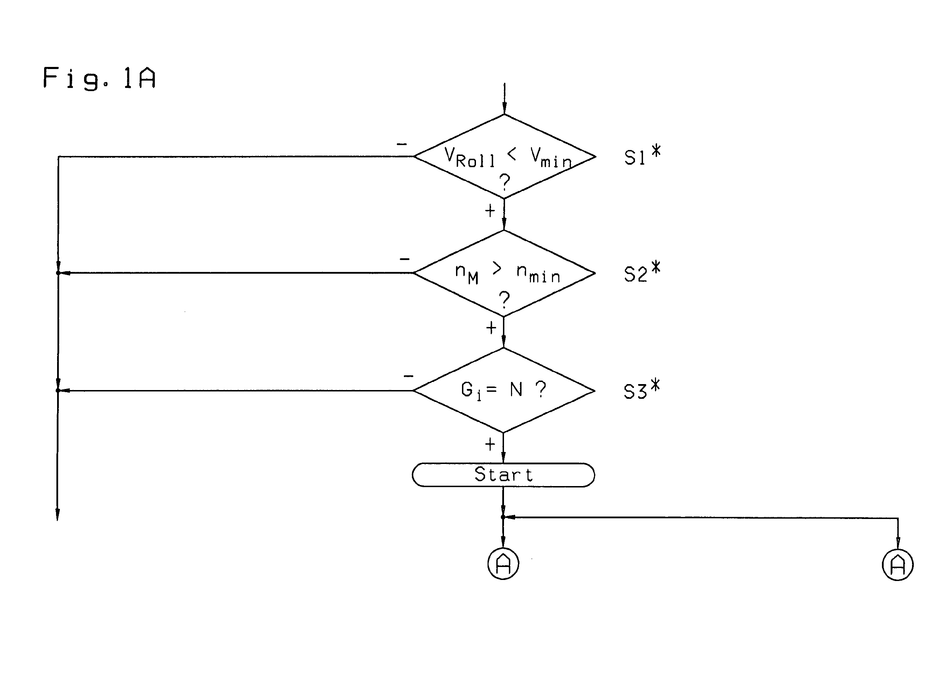

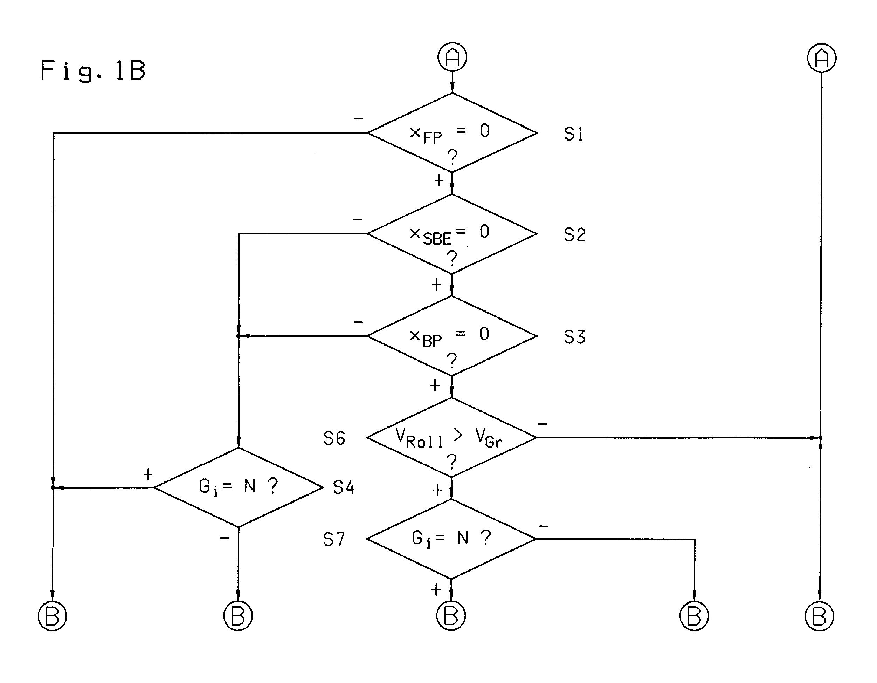

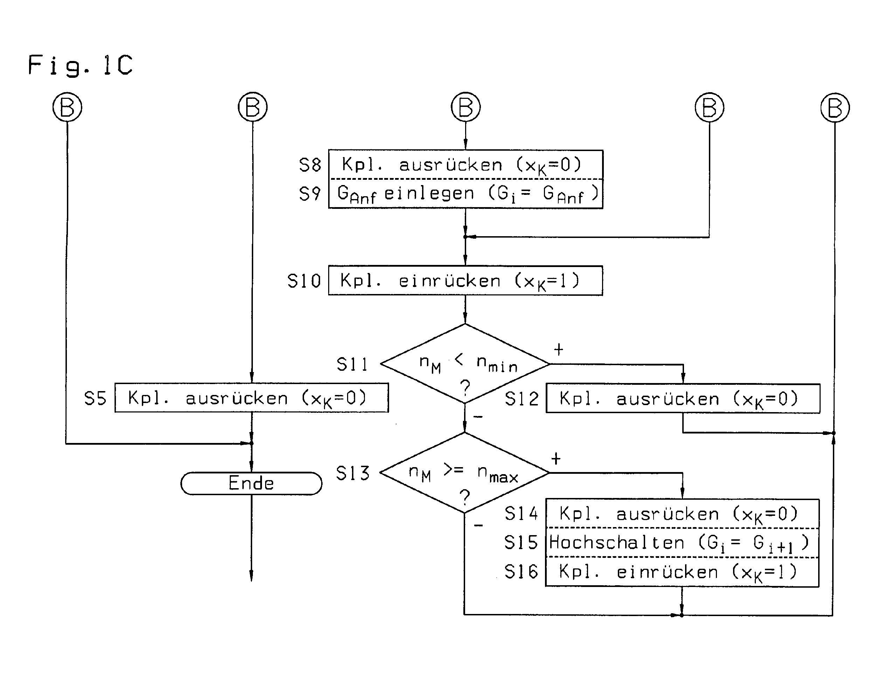

Gemäß dem in drei Teile aufgeteilten Ablaufplan nach Fig. 1, der für einen Antriebsstrang mit einem als automatisiertes Schaltgetriebe ausgebildeten Stufenschaltgetriebe und einem als passiv schließbare Reibungskupplung ausgebildeten Anfahrelement gilt, wird gemäß Fig. 1A innerhalb eines normalen Anfahr- oder Fahrmodus in den Schritten S1 * bis S3* geprüft, ob ein Fahrzeugstillstand vorliegt, also die z.B. über Raddrehzahlsensoren oder einen an der Ausgangswelle des Stufenschaltgetriebes angeordneten Drehzahlsensor erfasste Rollgeschwindigkeit V_{Roll} kleiner als eine festgelegte Mindestgeschwindigkeit Vₘᵢₙ ist, ob der Antriebsmotor läuft, d.h. die durch die Motorsteuerung gelieferte oder durch einen an der Kurbelwelle angeordneten Drehzahlsensor erfasste Motordrehzahl n_{M} größer als eine festgelegte Mindestdrehzahl nₘᵢₙ ist, und ob in dem Stufenschaltgetriebe kein Gang eingelegt ist, also der aktuell eingelegte Gang Gᵢ dem Neutralgang bzw. der Neutralstellung N des Getriebes entspricht.

Falls eine der drei Bedingungen nicht erfüllt ist, wird der laufende Anfahr-oder Fahrmodus unverändert weitergeführt. Wenn jedoch alle drei Bedingungen erfüllt sind, also bei Fahrzeugstillstand und laufendem Antriebsmotor der Antriebsstrang durch das in seine Neutral-Stellung geschaltete Stufenschaltgetriebe geöffnet ist, wird erfindungsgemäß eine Sicherheitsfunktion gestartet, die zur Vermeidung oder Begrenzung eines ungewünschten Anrollens des Kraftfahrzeugs dient.

In Fortführung des Ablaufplans nach Fig. 1A wird in Fig. 1B innerhalb der Sicherheitsfunktion in Schritt S1 geprüft, ob das Fahrpedal betätigt, also aus seiner Ruhestellung x_{FP} = 0 ausgelenkt ist. Falls eine Betätigung des Fahrpedals sensiert wird, so wird die Sicherheitsfunktion unmittelbar beendet und in den normalen Anfahr- oder Fahrmodus zurückgekehrt.

Andernfalls wird in dem nachfolgenden Schritt S2 geprüft, ob ein Schaltbetätigungselement, wie z.B. ein Fahrschalter oder ein Wählhebel, betätigt, d.h. aus seiner Neutrallage x_{SBE} = 0 ausgelenkt wird. Falls eine Betätigung des Schaltbetätigungselementes sensiert wird, so wird die Reibungskupplung bedarfsweise, also wenn ein Gang eingelegt ist, welches in Schritt S4 geprüft wird, in Schritt S5 ausgerückt, und danach die Sicherheitsfunktion beendet und in den normalen Anfahr- oder Fahrmodus zurückgekehrt (siehe Fig. 1 C).

Andernfalls wird in dem nach Schritt S2 folgenden Schritt S3 geprüft, ob das Bremspedal betätigt, also aus seiner Ruhestellung x_{BP} = 0 ausgelenkt wird oder ausgelenkt ist. Falls eine Betätigung des Bremspedals sensiert wird, so wird die Sicherheitsfunktion wie zuvor, gegebenenfalls nach dem Öffnen der Reibungskupplung, beendet und in den normalen Anfahr- oder Fahrmodus zurückgekehrt.

Die Betätigung eines Schaltbetätigungselementes, des Fahrpedals oder des Bremspedals wird somit derart interpretiert, dass sich der Fahrer an dem Fahrerplatz befindet und sich das Kraftfahrzeug unter Kontrolle des Fahrers befindet, so dass ein von dem Fahrer unbemerktes und unerwünschtes Anrollen des Kraftfahrzeugs nicht erfolgen kann bzw. durch eine geeignete Reaktion des Fahrers verhindert werden kann.

Liegt jedoch keine Betätigung eines der vorgenannten Fahrbedienungselemente vor, so wird in Schritt S6 geprüft, ob das Fahrzeug selbsttätig anrollt, also eine über einer festgelegten Grenzgeschwindigkeit v_{Gr} liegende Rollgeschwindigkeit v_{Roll} vorliegt. Falls dies nicht der Fall ist, also die Rollgeschwindigkeit v_{Roll} noch gleich oder nahe Null ist, wird vor Schritt S1 zurück verzweigt (siehe Fig. 1 A). Andernfalls wird zunächst in Schritt S7 geprüft, ob sich das Stufenschaltgetriebe weiterhin in seiner Neutral-Stellung befindet (Gᵢ = N), was beim ersten Durchlauf der Funktionsschleife zweifellos der Fall ist, bei einem wiederholten Durchlauf der Funktionsschleife aber aufgrund eines gegebenenfalls eingelegten Gangs nicht zwangsläufig erfüllt sein muss.

In Fortführung des Ablaufplans nach Fig. 1B wird in Fig. 1C bei in seiner Neutral-Stellung befindlichem Stufenschaltgetriebe (Gᵢ = N) in den nachfolgenden Schritten S8 bis S10 die Reibungskupplung ausgerückt (x_{K} = 0), ein zur Grenzgeschwindigkeit v_{Gr} und gegebenenfalls auch zur Anrollrichtung passender Anfahrgang G_{Anf} eingelegt (Gᵢ = G_{Anf}), und die Reibungskupplung wieder eingerückt (x_{K} = 1), wogegen bei eingelegtem Gang (Gᵢ ≠ N) nur die in diesem Zustand zwangsläufig geöffnete Reibungskupplung mit Schritt S10 eingerückt wird. Bei eingelegtem Anfahrgang wird durch das Einrücken der Reibungskupplung das anrollende Kraftfahrzeug unter der Wirkung des Schleppmomentes des im Leerlauf laufenden Antriebsmotors abgebremst und somit die von einem unkontrollierten Anrollen ausgehende Gefahr deutlich reduziert.

Anschließend wird in Schritt S11 geprüft, ob die Gefahr eines Abwürgens des Antriebsmotors besteht, also die Motordrehzahl n_{M} unterhalb einer festgelegten Mindestdrehzahl nₘᵢₙ liegt. Diese Situation tritt dann auf, wenn der eingelegte Anfahrgang in Anrollrichtung wirksam ist, und das an den Rädern der Antriebsachse wirksame Schleppmoment des Antriebsmotors größer als die Hangabtriebskraft ist, so dass das Kraftfahrzeug wie gewünscht abgebremst wird. Diese Situation kann aber auch dann auftreten, wenn der eingelegte Anfahrgang entgegen der Anrollrichtung wirksam ist, und die Hangabtriebskraft größer als die an den Rädern der Antriebsachse wirksame Zugkraft des Antriebsmotors ist, so dass das Anrollen zwar gebremst, die Anrollrichtung jedoch nicht umgekehrt werden kann. In beiden Fällen besteht die Gefahr, dass der Antriebsmotor abgewürgt wird, welches belastungstechnisch ungünstig ist. Um dies zu verhindern, wird in diesem Fall in Schritt S12 die Reibungskupplung ausgerückt und danach vor Schritt S1 zurück verzweigt (siehe Fig. 1 A).

Andernfalls wird in Schritt S13 geprüft, ob die Gefahr eines Überdrehens des Antriebsmotors besteht, wobei die Motordrehzahl n_{M} größer oder gleich einer festgelegten Maximaldrehzahl nₘₐₓ ist. Diese Situation tritt dann ein, wenn der eingelegte Anfahrgang in Anrollrichtung wirksam ist und das auf die Räder der Antriebsachse übertragene Schleppmoment des Antriebsmotors kleiner als die Hangabtriebskraft ist, so dass das Kraftfahrzeug, wenn auch gebremst, weiter bergab beschleunigt. Um in diesem Fall ein Überdrehen und eine damit verbundene Beschädigung oder Zerstörung des Antriebsmotors zu verhindern, wird in den Schritten S14 bis S16 die Reibungskupplung ausgerückt, um einen Gang hochgeschaltet, und die Reibungskupplung wieder eingerückt, bevor zu Schritt S1 zurück verzweigt wird. Andernfalls wird unmittelbar zu Schritt S1 zurück verzweigt (siehe Fig. 1 A).

Solange keine Betätigung eines Schaltbetätigungselementes, wie eines Fahrschalters oder eines Wählhebels, des Fahrpedals oder des Bremspedals vorliegt bzw. sensiert wird, werden die Schritte S1 bis S16 wiederholt durchlaufen, wobei in Abhängigkeit von der Rollgeschwindigkeit und der vorhergehenden Steuerungsabläufe die Zustände "eingelegte Neutralstellung" (Gᵢ = N) oder "eingelegter Gang" (Gᵢ ≠ N) des Stufenschaltgetriebes und die Zustände "ausgerückt" (x_{K} = 0) oder "eingerückt" (x_{K} = 1) der Reibungskupplung vorliegen können.

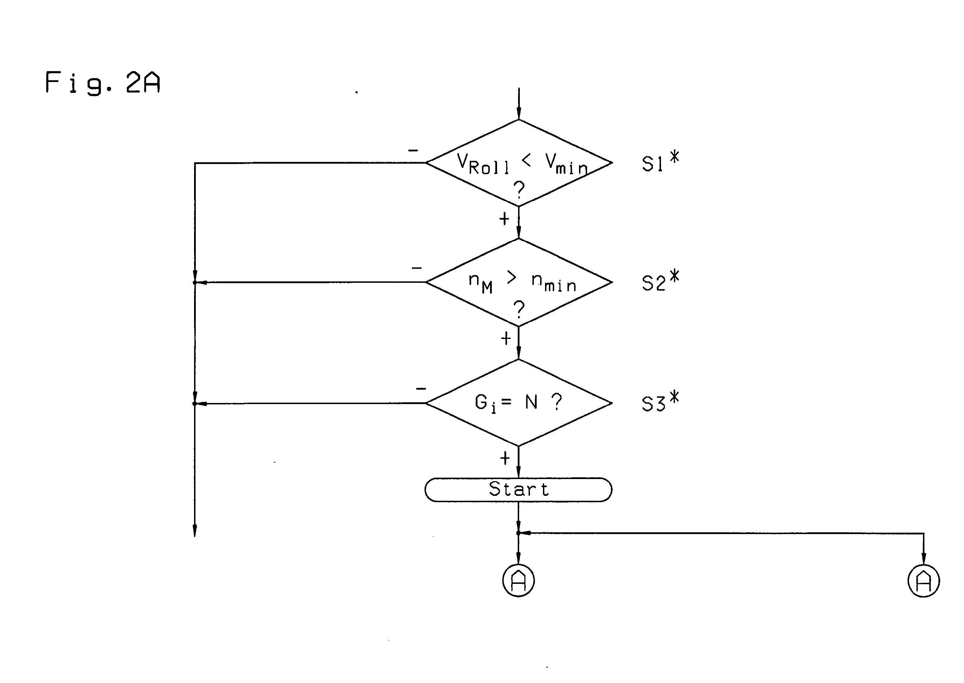

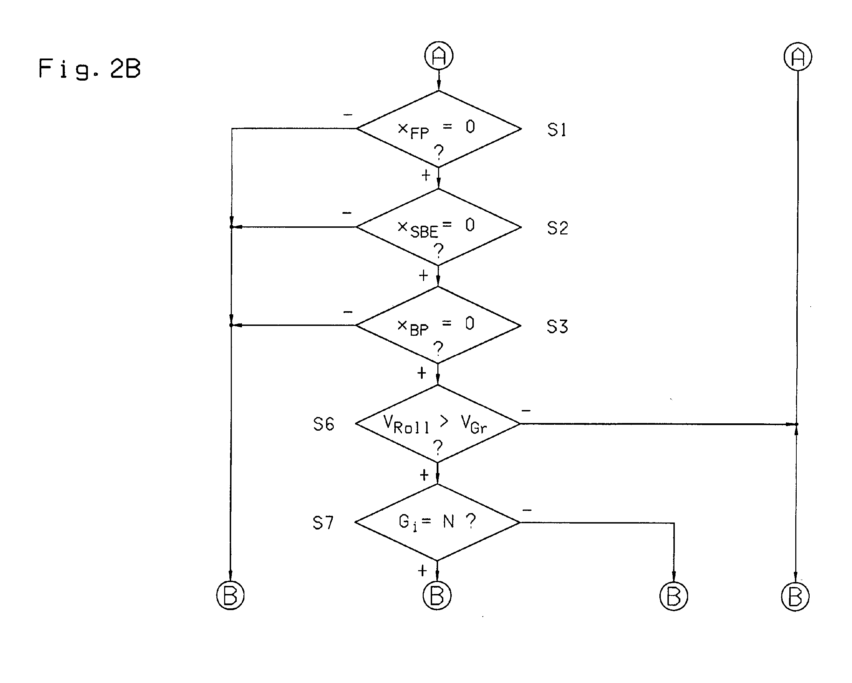

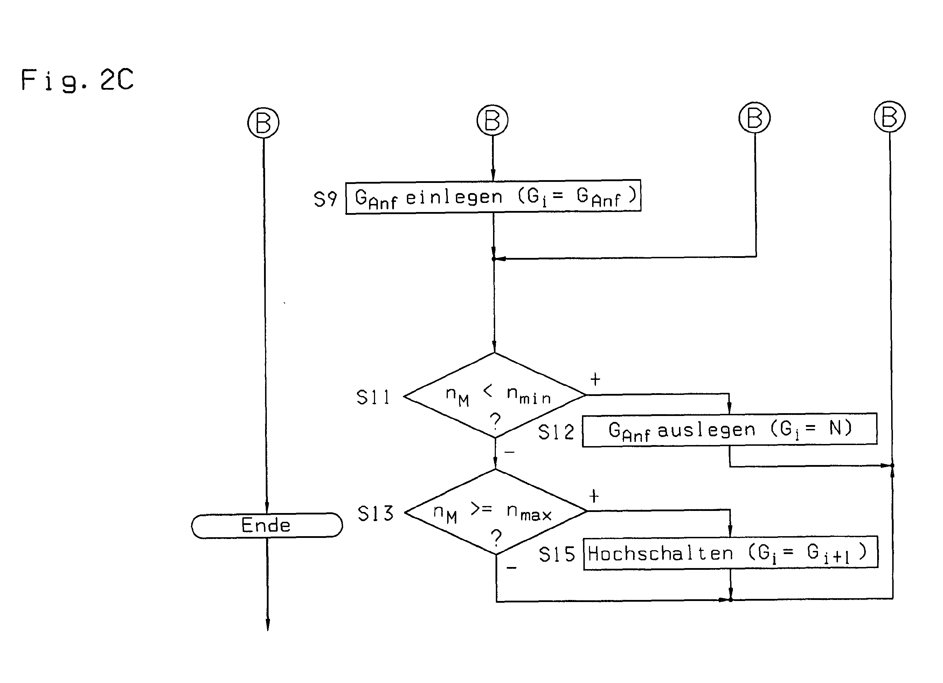

Eine Verfahrensvariante gemäß dem in drei Teile aufgeteilten Ablaufplan von Fig. 2, der für einen Antriebsstrang mit einem als Planeten-Automatgetriebe ausgebildeten Stufenschaltgetriebe und einem als hydrodynamischen Drehmomentwandler ausgebildeten Anfahrelement gilt, unterscheidet sich nur bauartbedingt von der zuvor beschriebenen Verfahrensvariante. So entfallen aufgrund des Drehmomentwandlers die dem Verlassen der Sicherheitsfunktion vorgelagerten Schritte S4 in Fig. 2B und S5 in Fig. 2C, sowie die dem Einlegen des Anfahrgangs in Fig. 2C in Schritt S9 vor- und nachgelagerten Schritte S8 und S10. Anstelle des Ausrückens der Reibungskupplung wird in Schritt S12 bauartbedingt der Anfahrgang ausgelegt, und es entfallen die dem Hochschalten in Schritt S15 vor- und nachgelagerten Schritte S14 und S16.

Durch die erfindungsgemäße Sicherheitsfunktion wird zwar ein aufgrund eines vorliegenden Fahrbahngefälles anrollendes Kraftfahrzeug nicht fest an seinem Standort gehalten, jedoch das Anrollen soweit verzögert, dass der Fahrer, selbst wenn er seinen Fahrerplatz vorübergehend verlassen hat, rechtzeitig reagieren kann. Die von dem Anrollen ausgehende Gefahr ist somit gegenüber einem unkontrollierten Anrollen deutlich reduziert. Zudem erfordert das Verfahren keinen zusätzlichen apparativen Aufwand, sondern greift auf ohnehin vorhandene Komponenten, wie Drehzahlsensoren, Schalt- und Kupplungsteller zurück.

### Bezugszeichen

- G_{Anf}: Anfahrgang
- Gᵢ: Eingelegter Gang
- Gᵢ₊₁: Nächst höherer Gang
- N: Neutralgang, Neutral-Stellung des Getriebes
- n_{M}: Motordrehzahl
- nₘₐₓ: Maximaldrehzahl
- nₘᵢₙ: Mindestdrehzahl
- S1 - S16: Verfahrensschritte
- S1* - S3*: Verfahrensschritte
- v_{Gr}: Grenzgeschwindigkeit
- vₘₐₓ: Maximalgeschwindigkeit
- vₘᵢₙ: Mindestgeschwindigkeit
- v_{Roll}: Rollgeschwindigkeit
- x_{BP}: Auslenkung des Bremspedals
- x_{FP}: Auslenkung des Fahrpedals
- x_{K}: Ausrückungsrate einer Reibungskupplung
- x_{SBE}: Auslenkung eines Schaltbetätigungselementes

## Patentansprüche

1. Verfahren zur Steuerung eines automatisierten Stufenschaltgetriebes, das innerhalb eines Antriebsstrangs eines Kraftfahrzeugs eingangsseitig über mindestens eine steuerbare Reibungskupplung mit einem als Verbrennungsmotor ausgebildeten Antriebsmotor und ausgangsseitig über einen Achsantrieb mit antreibbaren Rädern einer Antriebsachse in Verbindung steht, wobei bei Fahrzeugstillstand, laufendem Antriebsmotor und geöffnetem Antriebsstrang ein Anrollen des Kraftfahrzeugs mit einer Schaltung des Stufenschaltgetriebes verhindert oder zumindest begrenzt wird, **dadurch gekennzeichnet, dass** bei in seiner Neutral-Stellung geschaltetem Stufenschaltgetriebe (Gᵢ = N) eine Sicherheitsfunktion aktiviert wird, in der eine Betätigung eines Schaltbedienungselementes, des Fahrpedals und des Bremspedals sowie die aktuelle Rollgeschwindigkeit sensorisch erfasst werden, und in der bei nicht betätigten Fahrbedienungselementen (Schaltbedienungselement x_{SBE} = 0, Fahrpedal x_{FP} = 0, Bremspedal x_{BP} = 0) bei Überschreiten einer vorab festgelegten Grenzgeschwindigkeit (v_{Roll} > v_{Gr}) die Reibungskupplung bedarfsweise geöffnet (x_{K} = 0), ein Anfahrgang eingelegt (Gᵢ = G_{Anf}) und die Reibungskupplung geschlossen wird (x_{K} = 1).

2. Verfahren zur Steuerung eines automatisierten Stufenschaltgetriebes, das innerhalb eines Antriebsstrangs eines Kraftfahrzeugs eingangsseitig über einen hydrodynamischen Drehmomentwandler mit einem als Verbrennungsmotor ausgebildeten Antriebsmotor und ausgangsseitig über einen Achsantrieb mit antreibbaren Rädern einer Antriebsachse in Verbindung steht, wobei bei Fahrzeugstillstand, laufendem Antriebsmotor und geöffnetem Antriebsstrang ein Anrollen des Kraftfahrzeugs mit einer Schaltung des Stufenschaltgetriebes verhindert oder zumindest begrenzt wird, **dadurch gekennzeichnet, dass** bei in seiner Neutral-Stellung geschaltetem Stufenschaltgetriebe (Gᵢ = N) eine Sicherheitsfunktion aktiviert wird, in der eine Betätigung eines Schaltbedienungselementes, des Fahrpedals und des Bremspedals sowie die aktuelle Rollgeschwindigkeit sensorisch erfasst werden, und in der bei nicht betätigten Fahrbedienungselementen (Schaltbedienungselement x_{SBE} = 0, Fahrpedal x_{FP} = 0, Bremspedal x_{BP} = 0) bei Überschreiten einer vorab festgelegten Grenzgeschwindigkeit (v_{Roll} > v_{Gr}) ein Anfahrgang eingelegt wird (Gᵢ = G_{Anf}).

3. Verfahren nach Anspruch 1 oder 2, **dadurch gekennzeichnet, dass** unabhängig von der Anrollrichtung ein zur Grenzgeschwindigkeit passender Anfahrgang (G_{Anf}) für Vorwärtsfahrt eingelegt wird.

4. Verfahren nach Anspruch 1 oder 2, **dadurch gekennzeichnet, dass** zusätzlich die aktuelle Anrollrichtung sensorisch erfasst wird, und dass ein in Richtung der Anrollrichtung wirksamer und zur Grenzgeschwindigkeit passender Anfahrgang (G_{Anf}) eingelegt wird.

5. Verfahren nach zumindest einem der Ansprüche 1, 3 oder 4, **dadurch gekennzeichnet, dass** bei einer nachfolgenden Verzögerung des Kraftfahrzeugs mit Unterschreitung einer vorab festgelegten Mindestgeschwindigkeit (v_{Roll} < vₘᵢₙ) oder einer vorab festgelegten Mindestdrehzahl des Antriebsmotors (n_{M} < nₘᵢₙ) die Reibungskupplung wieder geöffnet wird (x_{K} = 0).

6. Verfahren nach Anspruch 5, **dadurch gekennzeichnet, dass** der eingelegte Anfahrgang (G_{Anf}) nach dem Öffnen der Reibungskupplung spätestens mit Erreichen des Fahrzeugstillstands ausgelegt wird (Gᵢ = N).

7. Verfahren nach zumindest einem der Ansprüche 2, 3 oder 4, **dadurch gekennzeichnet, dass** bei einer nachfolgenden Verzögerung des Kraftfahrzeugs mit Unterschreitung einer vorab festgelegten Mindestgeschwindigkeit (v_{Roll} < vₘᵢₙ) oder einer vorab festgelegten Mindestdrehzahl des Antriebsmotors (n_{M} < nₘᵢₙ) der eingelegte Anfahrgang ausgelegt wird (Gᵢ = N).

8. Verfahren nach zumindest einem der Ansprüche 1 bis 7, **dadurch gekennzeichnet, dass** bei einer nachfolgenden weiteren Beschleunigung des Kraftfahrzeugs bei Erreichen oder Überschreiten einer vorab festgelegten Maximalgeschwindigkeit (v_{Roll} ≥ vₘₐₓ) oder einer vorab festgelegten Maximaldrehzahl des Antriebsmotors (n_{M} ≥ nₘₐₓ) um einen Gang hochgeschaltet wird (Gᵢ = Gᵢ₊₁).

9. Verfahren nach zumindest einem der Ansprüche 1 bis 7, **dadurch gekennzeichnet, dass** bei einer nachfolgenden weiteren Beschleunigung des Kraftfahrzeugs bei Erreichen oder Überschreiten einer vorab festgelegten Maximalgeschwindigkeit (v_{Roll} ≥ vₘₐₓ) oder einer vorab festgelegten Maximaldrehzahl des Antriebsmotors (n_{M} ≥ nₘₐₓ) eine automatische Betätigung einer Fahrzeugbremse erfolgt.

10. Verfahren nach Anspruch 9, **dadurch gekennzeichnet, dass** das Bremsmoment der Fahrzeugbremse derart geregelt wird, dass die Rollgeschwindigkeit des Kraftfahrzeugs konstant gehalten wird.

11. Verfahren nach Anspruch 9, **dadurch gekennzeichnet, dass** das Bremsmoment der Fahrzeugbremse derart geregelt wird, dass die Rollgeschwindigkeit des Kraftfahrzeugs bis zum Erreichen des Fahrzeugstillstands abnimmt.

12. Verfahren nach zumindest einem der Ansprüche 1 bis 11, **dadurch gekennzeichnet, dass** nach der Betätigung mindestens eines Fahrbedienungselementes (Schaltbedienungselement x_{SBE} > 0, Fahrpedal x_{FP} > 0, Bremspedal x_{BP} > 0) die Sicherheitsfunktion beendet und in den normalen Anfahr- oder Fahrmodus gewechselt wird.

13. Verfahren nach zumindest einem der Ansprüche 1 und 12, **dadurch gekennzeichnet, dass** vor der Beendigung der Sicherheitsfunktion zumindest bei einer Betätigung eines Schaltbedienungselementes (x_{SBE} > 0) und/oder des Bremspedals (x_{BP} > 0) die Reibungskupplung geöffnet wird (x_{K} = 0).

## Claims

1. Method for controlling an automated step-by-step variable-speed transmission which is connected on the input side within a drive train of a motor vehicle by at least one controllable friction clutch to a drive motor which is embodied as an internal combustion engine and on the output side via an axle drive with two driveable wheels of a drive axle, wherein, when the vehicle is stationary, the drive motor running and the drive train opened, commencement of rolling of the motor vehicle is prevented or at least limited by shifting the step-by-step variable-speed transmission, **characterized in that** when the step-by-step variable-speed transmission (Gᵢ=N) is shifted into its neutral position a safety function is activated in which actuation of a shifting operation control element, of the accelerator pedal and of the brake pedal as well as the current rolling speed are sensed by a sensor, and in which, when the driving operator control elements (shifting operator control element x_{SBE} = 0, accelerator pedal x_{FP} = 0, brake pedal x_{BP} = 0) are not activated when a previously defined limiting speed (v_{Roll} > v_{Gr}) is exceeded, the friction clutch is opened as necessary (x_{K}=0), a starting gear speed is engaged (Gᵢ=G_{Anf}) and the friction clutch is closed (x_{K} = 1).

2. Method for controlling an automated step-by-step variable-speed transmission which is connected on the input side within a drive train of a motor vehicle by at least a hydro-dynamic torque converter to a drive motor which is embodied as an internal combustion engine and on the output side via an axle drive with two driveable wheels of a drive axle, wherein, when the vehicle is stationary, the drive motor running and the drive train opened, commencement of rolling of the motor vehicle is prevented or at least limited by shifting the step-by-step variable-speed transmission, **characterized in that** when the step-by-step variable-speed transmission (Gᵢ=N) is shifted into its neutral position and a safety function is activated in which actuation of a shifting operation control element, of the accelerator pedal and of the brake pedal as well as the current rolling speed are sensed by a sensor, and in which, when the driving operator control elements (shifting operator control element x_{SBE} = 0, accelerator pedal x_{FP} = 0, brake pedal x_{BP} = 0) are not activated when a previously defined limiting speed (v_{Roll} > v_{Gr}) is exceeded, a starting gear speed is engaged (Gᵢ=G_{Anf}) .

3. Method according to Claim 1 or 2, **characterized in that** the starting gear speed (G_{Anf}) which matches the limiting speed is engaged for forward travel independently of the direction in which rolling commences.

4. Method according to Claim 1 or 2, **characterized in that** in addition the current direction in which rolling commences is sensed by sensor, and **in that** a starting gear speed (G_{Anf}) which is effective in the direction in which rolling commences and matches the limiting speed is engaged.

5. Method according to at least one of Claims 1, 3 or 4, **characterized in that** the friction clutch is opened again (x_{K}=0) when there is subsequent deceleration of the motor vehicle and a previously defined minimum speed (v_{Roll} < vₘᵢₙ) or a previously defined minimum rotational speed of the drive motor (n_{M} < nₘᵢₙ) is undershot.

6. Method according to Claim 5, **characterized in that** the engaged starting gear speed (G_{Anf}) is disengaged after the opening of the friction clutch at the latest when the stationary state of the vehicle is achieved (Gᵢ=N).

7. Method according to at least one of Claims 2, 3 or 4, **characterized in that that** the engaged starting gear speed is disengaged (Gᵢ=N) when there is subsequent deceleration of the motor vehicle and a previously defined minimum speed (v_{Roll} < vₘᵢₙ) or a previously defined minimum rotational speed of the drive motor (n_{M} < nₘᵢₙ) is undershot.

8. Method according to at least one of Claims 1 to 7, **characterized in that that** the gear mechanism is shifted up by one gear speed (Gᵢ=Gᵢ₊₁) when there is subsequent acceleration of the motor vehicle and a previously defined maximum speed (v_{Roll} ≥ vₘₐₓ) or a previously defined maximum rotational speed of the drive motor (n_{M} ≥ nₘₐₓ) is reached or exceeded.

9. Method according to at least one of Claims 1 to 7, **characterized in that that** automatic activation of a vehicle brake takes place when there is subsequent acceleration of the motor vehicle and a previously defined maximum speed (v_{Roll} ≥ vₘₐₓ) or a previously defined minimum rotational speed of the drive motor (n_{M} ≥ nₘₐₓ) is reached or overshot.

10. Method according to Claim 9, **characterized in that** the braking torque of the vehicle brake is subjected to closed-loop control in such a way that the rolling speed of the motor vehicle is kept constant.

11. Method according to Claim 9, **characterized in that** the braking torque of the vehicle brake is subjected to closed-loop control in such a way that the rolling speed of the motor vehicle decreases until the vehicle stationary state is reached.

12. Method according to at least one of Claims 1 to 11, **characterized in that**, after the activation of at least one driving operator control element (shifting operator control element x_{SBE} > 0, accelerator pedal x_{FP} > 0, brake pedal x_{BP} > 0), the safety function is ended and the transmission is shifted into the normal starting mode or driving mode.

13. Method according to at least one of Claims 1 and 12, **characterized in that**, before the safety function is ended, the friction clutch is opened (x_{K} > 0) at least when a shifting operator control element (x_{SBE} > 0) and/or the brake pedal (x_{BP} > 0) is activated.

## Revendications

1. Procédé de commande d'une boîte de vitesse à rapports étagés automatisée, qui est en liaison à l'intérieur d'une chaîne cinématique d'un véhicule automobile du côté de l'entrée par le biais d'au moins un embrayage à friction commandable avec un moteur d'entraînement réalisé sous forme de moteur à combustion interne et du côté de la sortie par le biais d'une commande d'essieu avec des roues motrices d'un essieu moteur, un début de roulage du véhicule automobile à l'arrêt du véhicule, avec le moteur d'entraînement qui tourne, et la chaîne cinématique ouverte, étant empêché ou au moins limité par une commutation de la boîte de vitesse à rapports étagés, **caractérisé en ce que** lorsque la boîte de vitesse à rapports étagés (Gᵢ = N) est commutée dans sa position de point neutre, une fonction de sécurité est activée, dans laquelle un actionnement d'un élément de commande de commutation, de la pédale d'accélération et de la pédale de frein, ainsi que la vitesse de roulage actuelle, sont détectés par des capteurs, et dans laquelle lorsque des éléments de commande de conduite ne sont pas activés (élément de commande de commutation x_{SBE} = 0, pédale d'accélération x_{FP} = 0, pédale de frein x_{BP} = 0), lors d'un dépassement d'une vitesse limite établie préalablement (v_{Roll} > v_{Gr}), l'embrayage à friction est ouvert en fonction des besoins (x_{K} = 0), un rapport de démarrage est enclenché (Gᵢ = G_{Anf}) et l'embrayage à friction est fermé (x_{K} = 1).

2. Procédé de commande d'une boîte de vitesse à rapports étagés automatisée, qui est en liaison à l'intérieur d'une chaîne cinématique d'un véhicule automobile du côté de l'entrée par le biais d'un convertisseur de couple hydrodynamique avec un moteur d'entraînement réalisé sous forme de moteur à combustion interne et du côté de la sortie par le biais d'une commande d'essieu avec des roues motrices d'un essieu moteur, un début de roulage du véhicule automobile à l'arrêt du véhicule, avec le moteur d'entraînement qui tourne, et la chaîne cinématique ouverte, étant empêché ou au moins limité par une commutation de la boîte de vitesse à rapports étagés, **caractérisé en ce que** lorsque la boîte de vitesse à rapports étagés (Gᵢ = N) est commutée dans sa position de point neutre, une fonction de sécurité est activée, dans laquelle un actionnement d'un élément de commande de commutation, de la pédale d'accélération et de la pédale de frein, ainsi que la vitesse de roulage actuelle, sont détectés par des capteurs, et dans laquelle lorsque des éléments de commande de conduite ne sont pas activés (élément de commande de commutation x_{SBE} = 0, pédale d'accélération x_{FP} = 0, pédale de frein x_{BP} = 0), lors d'un dépassement d'une vitesse limite établie préalablement (v_{Roll} > v_{Gr}), un rapport de démarrage est enclenché (Gᵢ = G_{Anf}).

3. Procédé selon la revendication 1 ou 2, **caractérisé en ce qu'**indépendamment de la direction du début de roulage, un rapport de démarrage (G_{Anf}) pour la conduite en marche avant adapté à la vitesse limite est enclenché.

4. Procédé selon la revendication 1 ou 2, **caractérisé en ce que** la direction de début de roulage actuelle est en outre détectée par des capteurs, et **en ce qu'**un rapport de démarrage (G_{Anf}) actif dans la direction du début de roulage et adapté à la vitesse limite est enclenché.

5. Procédé selon au moins l'une quelconque des revendications 1, 3 ou 4, **caractérisé en ce que** dans le cas d'un ralentissement subséquent du véhicule automobile, avec passage en dessous d'une vitesse minimale établie préalablement (v_{Roll} < vₘᵢₙ) ou d'un régime minimal établi préalablement du moteur d'entraînement (n_{M} < nₘᵢₙ), l'embrayage à friction est à nouveau ouvert (x_{K} = 0).

6. Procédé selon la revendication 5, **caractérisé en ce que** le rapport de démarrage enclenché (G_{Anf}) est désenclenché (Gᵢ = N) après l'ouverture de l'embrayage à friction au plus tard à l'immobilisation du véhicule.

7. Procédé selon au moins l'une quelconque des revendications 2, 3 ou 4, **caractérisé en ce que** dans le cas d'un ralentissement subséquent du véhicule automobile avec passage en dessous d'une vitesse minimale établie préalablement (v_{Roll} < vₘᵢₙ) ou d'un régime minimal établi préalablement du moteur d'entraînement (n_{M} < nₘᵢₙ), le rapport de démarrage enclenché est désenclenché (Gᵢ = N).

8. Procédé selon au moins l'une quelconque des revendications 1 à 7, **caractérisé en ce que** dans le cas d'une réaccélération subséquente du véhicule automobile, à l'atteinte ou au dépassement d'une vitesse maximale établie préalablement (v_{Roll} ≥ vₘₐₓ) ou d'un régime maximal établi préalablement du moteur d'entraînement (n_{M} ≥ nₘₐₓ), un passage au rapport supérieur a lieu (Gᵢ = Gᵢ₊₁).

9. Procédé selon au moins l'une quelconque des revendications 1 à 7, **caractérisé en ce que** dans le cas d'une réaccélération subséquente du véhicule automobile, à l'atteinte ou au dépassement d'une vitesse maximale établie préalablement (v_{Roll} ≥ vₘₐₓ) ou d'un régime maximal établi préalablement du moteur d'entraînement (n_{M} ≥ nₘₐₓ), un actionnement automatique d'un frein du véhicule a lieu.

10. Procédé selon la revendication 9, **caractérisé en ce que** le couple de freinage du frein du véhicule est régulé de telle sorte que la vitesse de roulage du véhicule automobile soit maintenue constante.

11. Procédé selon la revendication 9, **caractérisé en ce que** le couple de freinage du frein du véhicule est régulé de telle sorte que la vitesse de roulage du véhicule automobile diminue jusqu'à atteindre l'immobilisation du véhicule.

12. Procédé selon au moins l'une quelconque des revendications 1 à 11, **caractérisé en ce qu'**après l'actionnement d'au moins un élément de commande de conduite (élément de commande de commutation x_{SBE} > 0, pédale d'accélération x_{FP} > 0, pédale de frein x_{BP} > 0), la fonction de sécurité est terminée, et l'on passe au mode de démarrage ou de conduite normal.

13. Procédé selon au moins l'une quelconque des revendications 1 et 12, **caractérisé en ce qu'**avant la fin de la fonction de sécurité, au moins lors d'un actionnement d'un élément de commande de commutation (x_{SBE} > 0) et/ou de la pédale de frein (_{XBP} > 0), l'embrayage à friction est ouvert (x_{K} = 0) .
